# EUROPEAN PATENT APPLICATION

(11) **EP 1 931 121 A1**
(43) Date of publication of application: **11.06.2008**
(21) Application number: 06301227.2
(22) Date of filing: 07.12.2006
(51) Int. Cl.: H04M 1/57, H04M 1/27

(54) **Method and device to ease contacts storage on a personal token**

(71) Applicant: GEMPLUS, 13420 Gémenos (FR)
(72) Inventor: rule, Gilles, 13012, MARSEILLE (FR)

(57) **Abstract**

The invention relates to a method and device to ease contacts storage on a personal token.

This method is based on detection of repetition of calls to an identified phone number and then suggestion to the end-user to store information such as name of the contact linked to this phone number into the phonebook managed by this personal token.

An application implementing such a method is disclosed as well.

## Description

The invention relates to a method and a device to ease the storing of used information into a database. More particularly, the invention relates to a method and a device for stimulating contacts storage on a personal token.

Currently, as disclosed in W002058364, it is possible to edit phone numbers stored in an electronic book of an electronic device, a phonebook editor is provided for modifying a portion, such as an area code, of one or more phone numbers stored in the electronic phonebook.

On current mobile phones such as the 6111 from Nokia, as disclosed on the web site available for example at http://www.jump.co.za/Product/Nokia-6111-296692.htm , the dynamic phonebook allows the end-user to enter new dialed phone numbers : when typing a phone number on the keyboard, a soft key (the default one) appears with 'save contact' action suggested. Such an automatic help to save contact may be cumbersome and felt as insistent by the caller.

Alternatively, as disclosed into US2006212482, a system of exchanging and managing information may include a mobile device configured to automatically insert, exchange and update a caller's contact information into a called end-user's phonebook. The automatic update mechanism is triggered when a call is made between two people on mobile phones or other devices.

This solution provides a help to the party called making sure he has got updated contacts but in no case it's a help for the caller.

It is thus desirable to provide a more user friendly way to allow the phone end-user to add contacts in his phonebook. There are indeed telephone numbers that might be important to the end-user but that are not stored in the phonebook because the user procrastinated.

This purpose is achieved by way of the invention as recited in the appended claims.

Other purposes, benefits and aspects of the invention will appear through the following description, which is made in reference to the appended figures, among which:
- Figure 1 represents the screens the end-user will see using an embodiment of the invention.
- Figure 2 is a flowchart showing a sequence of steps, according to one method in the system in Figure 1 for, when establishing a call and activating the dedicated application allowing the stimulation of the end-user to enter a often used contact into his phonebook, and
- Figure 3 shows the steps followed in an embodiment of the invention when the call ends.

According to one aspect of the invention, there is provided a method that is implemented on a calling device for instructing the end-user that the contact he's giving a call to, this contact is a one he already used and it could be a good solution to save it into the phonebook. The method includes detection of such repeated calls. Such a method is based on detection of repeated calls to the same phone number.

The at least phone number may or may not be the complete contact business card by which the called device can be reached. The at least phone number should however include sufficient information to allow to contact the called device. The invention involves a dedicated application to ease contacts storage on the personal device.

There are several ways by which the said application can stimulate contacts storage on a personal token.

In one embodiment, when a phone number of an outgoing call is keyed on the phone keyboard, this application is activated, using as an example the Call Control envelope command, as described in ETSI 102.223 Release 6, § 4.5 . If the said phone number is found not to be present in the phonebook, it is either systematically stored in a newly created holding list or a message is displayed to the end-user if he wants this said number to be stored into the phonebook.

The phonebook can be local and reside on the personal token, also referenced as an UICC card, SIM, USIM, Mega SIM, any other smart card or an integrated chip, on the mobile device or on a remote server.

A detailled implementation can be based on the usage of a dedicated holding list in which, as an example, the key to find the correct record in the list can be the PHONE NUMBER 04........01 of the end-user 20. Associated with each entry in the holding list is a COUNT (called 3 times) of the number of times a call is placed to the PHONE NUMBER 04........01. If the COUNT reaches a predetermined number, such as 3, a user interface or form 30 is automatically presented to the end-user 20, preferably at the end of that call, to allow the end-user to enter a NAME associated with the PHONE NUMBER 04........01. If a NAME is entered using a dedicated user interface or form 40, the entry including both the PHONE NUMBER and NAME is then stored in the phonebook and confirmed to the end-user 20, using a user interface or form 50.

The phonebook can be the one standardized in ETSI dedicated standards or another one stored as an example into a mobile terminal.

In an alternate embodiment, the caller may be suggested to add a new entry into his phonebook just at the beginning of the call he placed.

Another step can be added, allowing the automatic conversion from national phone numbers to international standardized ones, making sure that IE 04423XXXX1 and the +33442XXXX1 are not seen as two different numbers.

These different additional steps include, but are not limited to, usage of usual man to machine interface as used onto mobile terminal screen. They can be as well audio messages for blind people as example.

Hereafter, an embodiment of the invention will be described wherein the end-user is placing calls using a mobile terminal associated to a subscriber identity module, connected via a mobile radio communication network such as GSM or 3G telecommunication network. On the said subscriber identity module, in a dedicated memory, a dedicated application is stored. This dedicated application can be stored into the mobile terminal memory in another embodiment. Associated data such as the local phonebook, counters, and dedicated holding list can as well be stored into the subscriber identity module's memory or, in another embodiment, into the mobile terminal's memory.

However, those skilled in the art should recognize that the method is applicable to other types of communication sessions between two devices operable either on the same network or different networks.

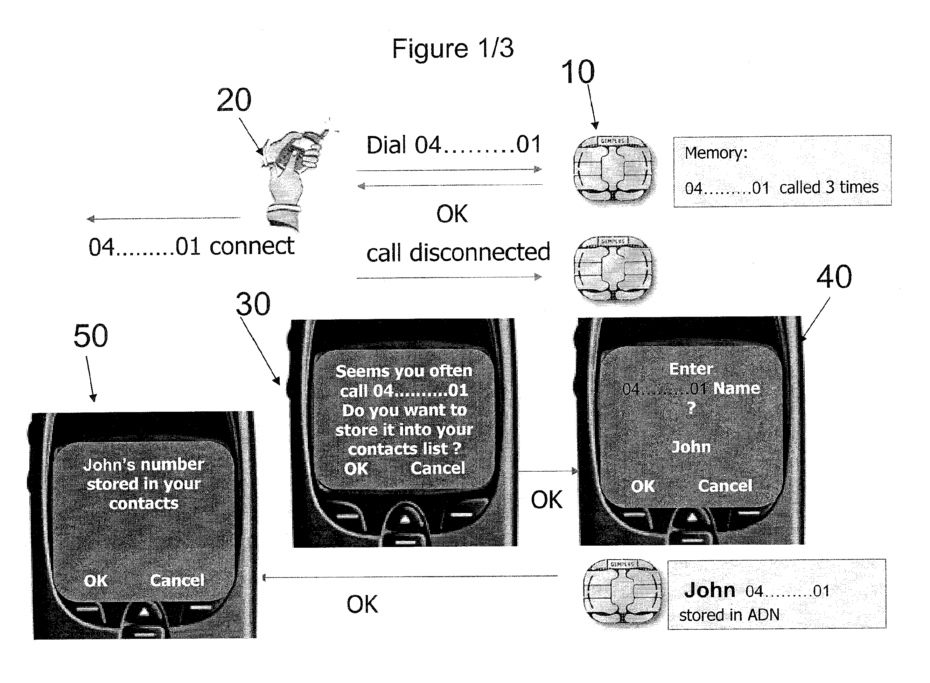

Figure 1 shows a sequence diagram presenting the main screens the end-user 20 will see when using such implementation of the disclosed solution.

The end-user 20 dials a phone number, then a dedicated application (not shown) stored into the subscriber identity module 10 is activated, memorizing the fact in our example that this is the third time this end-user 20 is giving a call to this number 04.....012.

When the call ends, the said application is aware of the fact that the call is disconnected and then screen 30 is shown to the end-user, inviting him to save this contact into his phonebook.

In case of yes, he's asked to enter at least the name of the new contact using screens (or other MMI, Man Machine Interface) such as screen 40 and a validation screen 50 is then displayed to confirm the saving of this new contact into the phonebook.

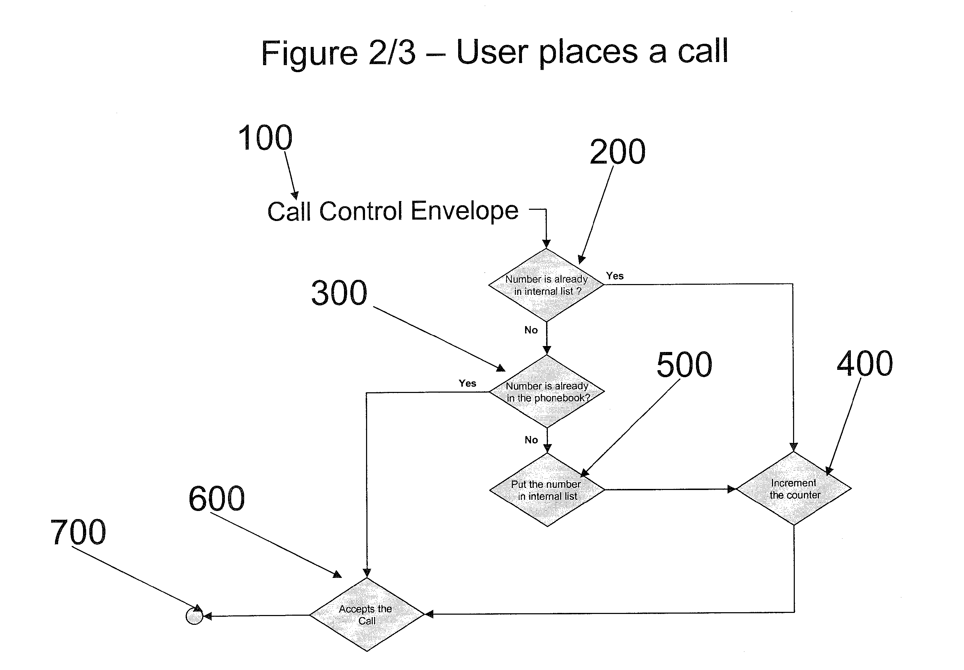

Referring to Figure 2, in order to get more in details, on call control envelope command reception from the mobile terminal as shown in step 100, the dedicated application is activated and it checks whether the dialed phone number is already stored into the internal list disclosed into step 200.

In case of yes, the counter dedicated to this number is incremented (see step 400); in order to know how many times this number was dialed.

In case of no, an additional check step 300 is executed, making sure this number was not entered into the phonebook using another way (such as manual entry, or Over The Air Phone book content exchange). In case the number is already into the phonebook, there is nothing to do for the application else than to follow step 600, accepting the call and then to end as described into step 700.

But, in case this number is not in the list, the dedicated application will add the number into the internal list as shown in step 500, increment the counter (See step 400) and then, accept the call executing step 600 and finally end ( see Step 700).

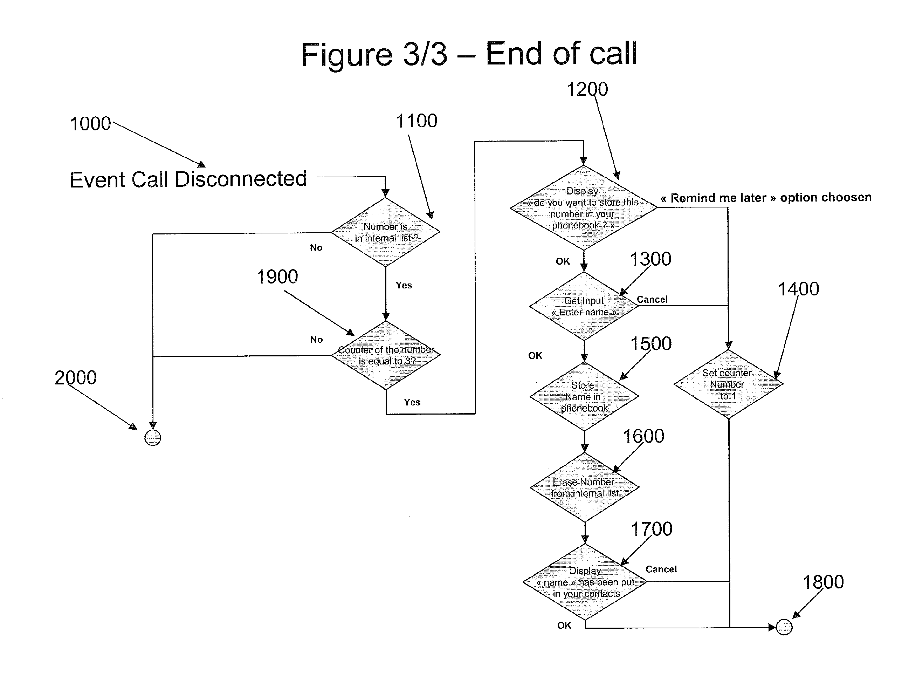

Figure 3 is a flowchart showing a sequence of steps, according to an embodiment, that implements the second part of the method described above. There is provided an event of CALL_DISCONNECTED from the mobile terminal to the dedicated application, inducing the said application into suggesting to the end-user to add a new entry in his phonebook after he placed the call, at the end of the call. As exposed into figure 3, on step 1000, event call disconnected reception, the dedicated application checks if the dialed number is already into the internal dedicated list as explained in step 1100.

In case of no, the dedicated application ends via step 2000.

In case of yes, another check is made in step 1900; testing if the counter associated to this phone number reached the maximum value (this parameter can be set to 3 in a preferred embodiment). In case the counter is less than the maximum value, then the dedicated application ends via step 2000. In case the counter reached this maximum value, the end-user 20 is asked something like 'do you want to store this number in your phonebook?' in step 1200, when the screen 30 is displayed.

In case the end-user 20 do not want to store the number into his phonebook, meaning that as example the 'remind me later' option is chosen, the associated number is set to 1 in step 1400. In case the end-user 20 agrees to store this new well used contact into his phonebook, he's asked to enter the associated name and optionally the other details concerning this new contact in step 1300.

Those data are effectively stored into the phonebook during step 1500, and the associated number is erased from dedicated list during step 1600, except if the end-user cancels (in this case, associated number is set to 1 in step 1400 and applications ends in step 1800). At the end of successful operation, the screen 50 is displayed to end-user 20 during step 1700 and the application ends via step 1800.

According to some embodiments of the method, the steps for obtaining an OTA (Over The Air) configuration of the application can be added and at least number of phone numbers for trigger can be configured.

The dedicated application (not shown) is preferably stored on the subscriber identity module, more specifically in the subscriber identity module memory.

According to one embodiment, this subscriber identity module can also be a piece of software, the dedicated said application being in this case also a piece of software.

According to one other embodiment, a new dedicated SIM toolkit application is stored in the subscriber identity module memory for implementing the method that is displayed using the MMI (Man Machine Interface) of the mobile station. Such an application is also known as an applet, or more specifically a cardlet, when implemented on a Java^{™} card type of subscriber identity module. Hereafter, this application will be referred to as an agent application. The subscriber identity module processor executes this agent application. Stored in the memory of the subscriber identity module is also a list (not shown) of identifiers and counters, more specifically network identifying phone numbers, and their corresponding counters.

Advantageously, in a preferred embodiment, the COUNT is compared to a maximum value of 3 and the storing of the contact is suggested to the end-user if the COUNT is plus or equal to this maximum value of 3. This maximum value of 3 confers indeed the particular effect of bringing a more comfortable and friendlier experience to the end-user.

Although the invention is described with the call control envelope and event call disconnect being implemented as described into ETSI standards, it is not to be construed to be limited as such. For example, although not ideal, the called number may be sent to the subscriber identity module via another channel between the mobile terminal and the subscriber identity module such a BIP (Bearer Independent Protocol).

As another example, although the mobile terminal and the subscriber identity module are shown and described to be linked devices, it should not be construed to be limited as such. They can be as example two separate devices communicating using contactless channels such as infrared IrDA or ISO 14443.

The contact information include, but are not limited to, a fixed line telephone number, a mobile phone number, a VoIP softphone number, a computer contact number, a connected personal digital assistant number, or the like. Accordingly, these devices operate on networks including a public switched telephone network (PSTN), a mobile communication network, an Internet protocol (IP) network, etc. The communication session may be a voice or a data communication session. Examples of a data communication session include, but are not limited to, audio streaming, video streaming, video conferencing, Voice Over IP (VOIP) etc.

In one specific embodiment of the invention, the called device includes a VoIP device. In this embodiment, the identity of the called device includes a Session Initiation Protocol (SIP) identifier.

Another advantage of the present embodiment of the invention is to propose to the end-user a discovery of a phonebook backup services which consists in launching on regular bases a phonebook backup on a remote server, for example on every 10 or 30 new entries in the phonebook. Such backup service onto a remote server is easily associated to the presently described aspects of the contact entering easing service. The same application is used for remote backup and for performing the above described service. For the user, the look and feel of the application is then identical.

## Claims

1. - A Method to ease contact storage on a phonebook of a terminal system of a caller comprising a terminal and a personal token, said method comprising a dialed phone number detection step (100), and being **characterized in that** it comprises:
- a step of detection of a predetermined repetition of call to the said phone number (500),
- in case of detection of the predetermined repetition of call to the said phone number (1900), a step which initiates the storage of the phone number into the caller phonebook (1500) .

2. The method according to claim 1, **characterized in that** the initiating step consists in prompting the user into launching the memorizing of the said phone number into the phonebook.

3. The method according to claim 1 or claim 2, **characterized in that** the phonebook is memorized in the personal token.

4. The method to ease contacts storage on a phonebook according to anyone of the preceding claims, **characterized in that** the step of initiating the storage of the phone number into the caller phonebook (1500), is performed in case of a known number of calls to the said phone number (400) is superior or equal to 3.

5. The method to ease contact storage on a phonebook according to anyone of the preceding claims, **characterized in that** the step of initiating the storage of the phone number into the caller phonebook (1500) implies the usage of a man to machine interface hosted on the mobile terminal to help the mobile terminal's end-user (20) to conduct memorizing of this new contact into the said phonebook (30, 40, 50).

6. A terminal system of a caller comprising a mobile terminal and a personal token (10) which terminal system stores and runs instructions for inducing the terminal system into easing storage of a called number into a phonebook of the caller, **characterized in that** the instructions induce the terminal system into :
- detecting a predetermined repetition of call to the said phone number (500),
- in case of detection of the predetermined repetition of call to the said phone number (1900), initiating a storage of the phone number into the caller phonebook (1500).

7. The system to ease contacts storage on a personal token (10) according to claim 6, **characterized in that** a dedicated application is stored in the personal token (10), said application being run by the personal token (10), which application performs detection of the predetermined repetition and the initiating of the storage of the phone number into the caller phonebook.

8. The terminal system according to claim 6 or claim 7, **characterized in that** the said mobile terminal has a display module for displaying the screens to ease contacts storage (30, 40, 50) on the said personal token (10).

9. A personal token (10) for being associated to a terminal inside a communication network, the said personal token (10) being **characterized in that** it stores and runs instructions which induce the personal token into
- detecting a predetermined repetition of call to the said phone number (500),
- in case of detection of the predetermined repetition of call to the said phone number (1900), initiating a storage of the phone number into the caller phonebook (1500).
